# EUROPEAN PATENT SPECIFICATION

(11) **EP 2 540 507 B1**
(45) Date of publication and mention of the grant of the patent: **24.02.2016**
(21) Application number: 12174140.9
(22) Date of filing: 28.06.2012
(51) Int. Cl.: B41J 2/17, B41J 2/14

(54) **Liquid droplet discharge apparatus and ink set**
Flüssigkeitstropfen-Abgabevorrichtung und Tintensatz
Appareil de décharge de gouttelettes de liquide et jeu d'encres

(30) Priority: 28.06.2011 JP 2011142926
(43) Date of publication of application: 02.01.2013
(73) Proprietor: Seiko Epson Corporation, Shinjuku-ku Tokyo (JP)
(72) Inventor: Aruga, Tomohiro, Suwa-shi, Nagano 392-8502 (JP); Ishihara, Daisuke, Suwa-shi, Nagano 392-8502 (JP)
(74) Representative: Miller Sturt Kenyon

(56) References cited:
- EP-A1- 1 059 337
- JP-A- 2006 002 094
- US-A- 5 851 274
- US-A1- 2002 002 930
- US-A1- 2004 257 420
- US-A1- 2010 056 704

## Description

The present invention relates to a liquid droplet discharge apparatus and an ink set.

Hitherto, inks containing a pigment or a dye as a color material have been known. Pigment inks containing a pigment as a color material are preferably used particularly in recording of letters and the like in view of reduced bleeding and excellent water resistance and light resistance. In addition, dye inks containing a dye as a color material are preferably used particularly in recording of images and the like in view of excellent gloss and color developability and vivid colors.

When a pigment ink and a dye ink having the above-described characteristics are used together, the recording quality of both of letters and images which are recorded on a recording medium becomes excellent. For this reason, in recent years, liquid droplet discharge apparatuses having a pigment ink and a dye ink have been widely used. US 2004/257420 A1, US 2010/056704 A1 and JP 2006002094 A discloses such apparatuses.

However, in image recording using a liquid droplet discharge apparatus having a pigment ink and a dye ink, the pigment ink and the dye ink are mixed on a nozzle surface having a nozzle hole for discharging an ink in some cases. In such cases, the dispersibility of the pigment in the pigment ink is destructed by the dye ink, and the pigment aggregates in some cases. Particularly, in cleaning of the nozzle surface with a wiping member which is provided to clean the nozzle surface, the pigment aggregate blocks the nozzle hole, and thus ink discharge stability is reduced in some cases. In addition, there may occur problems such as dropping of the pigment aggregate adhering to the nozzle surface onto a recording medium.

In order to reduce the aggregation of the pigment, in JP-A-2010-84136, there is a description of the addition of a polymer having a lactam structure to a dye ink. In addition, in JP-A-2006-2094, there is a description of the regulation of the amount of counter ions which are included in a pigment ink and a dye ink.

However, in the above-described related arts, when a pigment ink and a dye ink are mixed, dispersion destruction of the pigment cannot be sufficiently suppressed, and thus pigment aggregation occurs on a nozzle surface and discharge errors occur in some cases.

An advantage of some aspects of the invention is that it provides a liquid droplet discharge apparatus having excellent discharge stability even when a pigment ink and a dye ink are mixed.

A liquid droplet discharge apparatus according to an aspect of the invention is defined in claim 1.

According to the liquid droplet discharge apparatus of this aspect, even when the pigment ink and the dye ink are mixed, the dispersibility of the pigment contained in the pigment ink is excellent, and the discharge stability is excellent.

The first nozzle array may be disposed at the endmost of the plurality of nozzle arrays arranged on the nozzle surface.

A plurality of the second nozzle arrays may be provided in order to discharge a plurality of types of dye inks from different nozzle arrays, and the plurality of the second nozzle arrays may be arranged to be closer to the first nozzle array in ascending order of conductivity of the dye ink to be discharged.

The second nozzle array may be divided into groups having a predetermined number of nozzle holes in a direction of the arrangement of the nozzle holes in order to discharge a plurality of types of dye inks, and the groups may be arranged in the direction of the arrangement of the nozzle holes in ascending order of conductivity of the dye ink to be discharged.

The wiping member may wipe the nozzle surface in order from the group which discharges a dye ink having a low conductivity in the direction of the arrangement of the nozzle holes.

An ink set according to an aspect of the invention is defined in claim 8.

According to the ink set of the invention, even when the pigment ink and the dye ink are mixed, the dispersibility of the pigment contained in the pigment ink is excellent.

Embodiments of the invention will be described by way of example only with reference to the accompanying drawings, wherein like numbers reference like elements.
Fig. 1 is a perspective view showing the configuration of a printer of a first embodiment and a second embodiment.
Fig. 2 is a schematic view showing the arrangement of nozzles which are provided in an ink jet head of the first embodiment.
Fig. 3 is a partial cross-sectional view showing the internal configuration of the ink jet head of the first embodiment and the second embodiment.
Fig. 4 is a schematic view showing the arrangement of nozzles which are provided in the ink jet head of the second embodiment.
Fig. 5 is a schematic view showing the arrangement of nozzles which are provided in an ink jet head of Example 1 and Comparative Example 1.
Fig. 6 is a schematic view showing the arrangement of nozzles which are provided in an ink jet head of Example 2 and Comparative Example 2.
Fig. 7 is a schematic view showing the arrangement of nozzles which are provided in an ink jet head of Example 3 and Comparative Example 3.

Hereinbelow, preferred embodiments of the invention will be described. The embodiments to be described below are provided to describe an example of the invention. In addition, the invention is not limited to the following embodiments, and includes various modification examples to be carried out within the scope of the invention. 1. Ink Set

An ink set according to an aspect of the invention has a pigment ink and a dye ink. The ink set according to this embodiment can be applied to a liquid droplet discharge apparatus to be described later. Hereinbelow, the pigment ink and the dye ink which are usable in the ink set according to this embodiment will be described in detail.

A pigment ink (hereinbelow, simply sometimes referred to as "pigment ink") which is usable in the ink set according to this embodiment contains water and a pigment, and a dye ink (hereinbelow, simply sometimes referred to as "dye ink") which is usable in the ink set according to this embodiment contains water and a dye. Hereinbelow, simply referring as "ink" includes both of the pigment ink and the dye ink.

The relationship between the conductivity [E₁ (mS/cm)] of the pigment ink and the conductivity [E₂ (mS/cm)] of the dye ink is expressed by the formula 0<(E₂- E₁)≤3. When the conductivity of the pigment ink [E₁ (mS/cm)] and the conductivity of the dye ink [E₂ (mS/cm)] satisfy the relationship of 0<(E₂-E₁)≤3, the dispersibility of the pigment contained in the pigment ink is difficult to decrease when the pigment ink and the dye ink are mixed. Accordingly, discharge errors occurring due to nozzle clogging and the like can be reduced. When the relationship between the conductivity of the pigment ink and the conductivity of the dye ink is greater than the above range, the dispersibility of the pigment contained in the pigment ink is reduced when the pigment ink and the dye ink are mixed, and thus aggregation of the pigment and the like occurs in some cases. In addition, when the relationship between the conductivity of the pigment ink and the conductivity of the dye ink is less than the above range, the solubility with respect to the water of the dye is reduced, and thus discharge errors occur, or the color developing density of a recorded image is reduced in some cases.

The detailed reason that the relationship between the conductivity of the pigment ink and the conductivity of the dye ink has an influence on the aggregation of the pigment is not clear, but it is thought that it is due to the following mechanism.

There is a tendency that the conductivity of the ink increases with an increase in the amount of ionized ions in the ink. That is, the fact that the dye ink has a high conductivity shows that the amount of ions which are ionized in the dye ink is large.

For example, when a dye ink having a relatively higher conductivity than a pigment ink is used, the conductivity of the periphery of the pigment particles increases when the pigment ink and the dye ink are mixed. As a result, the electric double layer around the pigment contracts, and thus it is thought that the distance between the pigment particles is reduced and the aggregation of the pigment occurs. On the other hand, when a dye ink having a relatively low conductivity is used, the amount of ions derived from the dye ink is reduced. Accordingly, the conductivity of the periphery of the pigment particles is difficult to increase even when the pigment ink and the dye ink are mixed. For this reason, it is thought that the aggregation of the pigment does not occur easily.

The conductivity [E₁ (mS/cm)] of the pigment ink is preferably 0.5 to 2.5, and more preferably 1.0 to 2.0. When the conductivity of the pigment ink is in the above range, the dispersibility of the pigment in the pigment ink becomes excellent, and the discharge stability of the pigment ink becomes excellent.

The conductivity [E₂ (mS/cm)] of the dye ink is preferably 2.0 to 5.0, and more preferably 3.0 to 4.0. When the conductivity of the dye ink is in the above range, the solubility of the dye in the dye ink becomes excellent, and the discharge stability of the dye ink becomes excellent.

Regarding the conductivity of the ink, an electric conductivity meter measures the conductivity of an ink of which the temperature is set to 20°C. Specifically, DS-52 (trade name, manufactured by Horiba, Ltd.) can be used as the electric conductivity meter.

The pigment which is used in the pigment ink preferably has a metallic salt structure as will be described later. Accordingly, the dispersibility of the pigment is improved, and the aggregation of the pigment does not occur easily.

The dye which is used in the dye ink preferably has a metallic salt structure as will be described later. Accordingly, the solubility of the dye is improved.

The average limiting equivalent conductivity (S·cm²/eq) of metallic ions generated from the pigment is preferably higher than the limiting equivalent conductivity (S·cm²/eq) of metallic ions generated from the dye. Accordingly, when the pigment ink and the dye ink are mixed, the aggregation of the pigment can be further reduced.

The detailed reason that the relationship between the limiting equivalent conductivities has an influence on the aggregation of the pigment is not clear, but it is thought that it is due to the following mechanism.

For example, when the limiting equivalent conductivity of the metallic ions generated from the dye is higher than the average limiting equivalent conductivity of the metallic ions generated from the pigment, the conductivity of the periphery of the pigment particles increases when the pigment ink and the dye ink are mixed. That is, the pigment particles easily meet the metallic ions having a high limiting equivalent conductivity. As a result, the electric double layer around the pigment contracts, and thus it is thought that the distance between the pigment particles is reduced and the aggregation of the pigment occurs.

On the other hand, when the limiting equivalent conductivity of the metallic ions generated from the dye is lower than the limiting equivalent conductivity of the metallic ions generated from the pigment, the conductivity of the periphery of the pigment particles is difficult to increase. For this reason, it is thought that the aggregation of the pigment does not occur easily.

The limiting equivalent conductivity (S·cm²/eq) of metallic ions is an eigenvalue in an infinite dilution state, and is known as a value which is defined with the Law of Independent Ion Migration. That is, in the Law of Independent Ion Migration, the limiting molar conductivity of electrolyte in an infinite dilution state is expressed by the sum of the limiting molar conductivity of cations and the limiting molar conductivity of anions. The infinite dilution state does not mean that the electrolyte (ions) is not present, but means that the distance between the cation and the anion in the solution is infinite, and the cation and the anion have no influence on each other. The equivalent conductivity (S·cm²/eq) of metallic ions is a value which is obtained by dividing the limiting molar conductivity (S·cm²/mol) of the metallic ions by the valence of the metallic ions.

The limiting equivalent conductivities of many types of metallic ions are well known. Specifically, the limiting equivalent conductivity (S·cm²/eq) of potassium ions (K+) at 25°C is 73.5, the limiting equivalent conductivity (S·cm²/eq) of sodium ions (Na+) at 25°C is 50.1, and the limiting equivalent conductivity (S·cm²/eq) of lithium ions (Li+) at 25°C is 38.7 (Electrochemical Soci. of Japan, "Electrochemical Manual, 4th edition"). In addition, the limiting equivalent conductivity of metallic ions can be obtained by testing. The limiting equivalent conductivity of metallic ions can be determined by measuring a change in the equivalent conductivity with respect to the concentration and performing extrapolation to zero concentration using an appropriate method.

In addition, when two or more types of metallic ions are generated from the pigment, the average limiting equivalent conductivity is set as the limiting equivalent conductivity of the metallic ions. The average limiting equivalent conductivity shows an average value of the limiting equivalent conductivities of the metallic ions generated from the pigment. For example, the average limiting equivalent conductivity of m X-ions and n Y-ions is obtained by the formula [(limiting equivalent conductivity of X-ions)xm+(limiting equivalent conductivity of Y-ions)×n]/(m+n). When two or more types of metallic ions are generated from the dye, the average limiting equivalent conductivity can be obtained in the same manner as in the case of the metallic ions generated from the pigment.

### 1.1. Pigment Ink

The pigment ink contains water and a pigment. Hereinbelow, the ingredients which are contained in the pigment ink will be described.

### (1) Pigment

As a pigment, known pigments can be used, but self-dispersing pigments are preferably used. A self-dispersing pigment is a pigment which can be dispersed and/or dissolved in an aqueous medium without a dispersant. Here, "dispersed and/or dissolved in an aqueous medium without a dispersant" means a state in which even when a dispersant for dispersing the pigment is not used, the pigment is stably present in the aqueous medium due to a hydrophilic group on its surface. When a self-dispersing pigment is used, the amount of a dispersant used for dispersing the pigment can be reduced, and thus ink foams resulting from the dispersant can be reduced, and an ink having excellent discharge stability is easily prepared.

The self-dispersing pigment may have a hydrophilic group on a surface of the pigment. The hydrophilic group on the surface of the pigment is preferably one or more hydrophilic groups selected from the group consisting of -OM, -COOM, -CO-, -SO₃M,-SO₂M, -SO₂NH₂, -RSO₂M, -PO₃HM, -PO₃M₂, -SO₂NHCOR, -NH₃, and -NR₃ (where M represents a hydrogen atom, an alkali metal (for example, lithium, sodium, and potassium), ammonium, a phenyl group which may have a substituent, or organic ammonium, and R represents an alkyl group having a carbon number of 1 to 12, or a naphthyl group which may have a substituent).

The pigment which is used in the pigment ink according to this embodiment preferably has a metallic salt structure. As described above, when the pigment ink has a metallic salt structure, the dispersibility of the pigment is improved, and the aggregation of the pigment does not occur easily.

The metallic ions generated from the pigment are preferably at least one of potassium ions and sodium ions. Accordingly, the dispersibility of the pigment in the pigment ink can be improved.

The pigment is manufactured by performing, for example, a physical treatment or a chemical treatment for binding (grafting) the hydrophilic group to the surface of the pigment. As the physical treatment, for example, a vacuum plasma treatment can be performed. In addition, as the chemical treatment, for example, wet oxidation can be performed for oxidization using an oxidizing agent in water, or a p-aminobenzoic acid can be bound to the surface of the pigment so as to bind the carboxyl group to the surface of the pigment with a phenyl group therebetween.

When the pigment ink is used as a black ink (hereinbelow, sometimes referred to as "pigment black ink"), the surface of the pigment is preferably treated by an oxidation treatment using a hypohalous acid and/or its salt, ozone, or a persulfuric acid and/or a persulfate in view of high color development.

When the pigment ink is used as a color ink (hereinbelow, sometimes referred to as "pigment color ink") other than a black ink, the pigment preferably has the hydrophilic group on its surface with a phenyl group therebetween in view of high color development. As a surface treatment section which binds a hydrophilic group to the surface of the pigment with a phenyl group therebetween, various known surface treatment sections can be applied, and a sulfanilic acid, a p-aminobenzoic acid, a 4-aminosalicylic acid, or the like can be bound to the surface of the pigment so as to bind the hydrophilic group to the surface of the pigment with a phenyl group therebetween.

The pigment which is used in the pigment black ink is not particularly limited. However, carbon black manufactured by a known method such as a contact method, a furnace method, and a thermal method can be used. Preferred specific examples of the carbon black include No. 2300, 900, MCF88, No. 20B, No. 33, No. 40, No. 45, No. 52, MA7, MA8, MA100, and No. 2200B (all manufactured by Mitsubishi Chemical Corporation), Color Black FW1, FW2, FW2V, FW18, FW200, S150, S160, and S170, Pretex 35, U, V, and 140U, Special Black 6, 5, 4A, 4, and 250 (all manufactured by Degussa AG), Conductex SC, Raven 1255, 5750, 5250, 5000, 3500, 1255, and 700 (all manufactured by Columbia Carbon Inc.), and Regal 400R, 330R, and 660R, Mogul L, Monarche 700, 800, 880, 900, 1000, 1100, 1300, and 1400, and Elftex 12 (manufactured by Cabot Corporation). These carbon blacks may be used singly or as a mixture of two or more types.

In addition, the pigment which is used in the pigment color ink is not particularly limited. However, examples thereof include phthalocyanine-based, azo-based, anthraquinone-based, azomethine-based, and condensed ring-based pigments, in addition to pigments listed in the Color Index such as pigment yellows, pigment reds, pigment violets, and pigment blues, and also include organic pigment such as Orange Nos. 228 and 405 and Blue Nos. 1 and 404, and inorganic pigments, such as titanium oxide, zinc oxide, zirconium oxide, iron oxide, ultramarine, iron blue, and chromium oxide. Specific examples thereof include C.I. Pigment Red 1, 3, 5, 8, 9, 16, 17, 19, 22, 38, 57:1, 90, 112, 122, 123, 127, 146, and 184; C.I. Pigment Violet 1, 3, 5:1, 16, 19, 23, and 38; and C.I. Pigment Blue 1, 2, 15, 15:1, 15:2, 15:3, 15:4, and 16.

In addition, commercialized products can also be used as the pigment. Examples thereof include Microget CW1 (manufactured by Orient Chemical Industries Co., Ltd.), CAB-O-JET250C and CAB-O-JET260M (all manufactured by Cabot Corporation).

The content of the pigment is preferably 1 mass% to 20 mass%, and more preferably 1 mass% to 10 mass% with respect to the total mass of the pigment ink.

In addition, the average particle diameter of the pigment is preferably in the range of 50 nm to 250 nm from the viewpoint of the preservation stability of the ink, prevention of nozzle clogging, and the like.

### (2) Water

The pigment ink contains water. The water functions as the main solvent to disperse or dissolve the above-described pigment.

The water is preferably pure or ultrapure water in which ionic impurities are removed as much as possible, such as ion-exchange water, ultrafiltered water, reverse osmosis water, or distilled water. In addition, the water is preferably subjected to sterilization with, for example, ultraviolet irradiation or addition of hydrogen peroxide because the occurrence of mold and bacteria can be prevented when an ink using a pigment-dispersed liquid and the water is stored for a long period of time.

The water contained in the pigment ink according to this embodiment is preferably 50 mass% or greater with respect to the total mass of the pigment ink.

### (3) Other Ingredients

The pigment ink according to this embodiment may contain a surfactant. Examples of the surfactant include nonionic surfactants, cationic surfactants, anionic surfactants, and amphoteric surfactants. The surfactants may be used singly or in mixture of two or more types.

Among them, nonionic surfactants can be preferably used because the permeability and fixability of the ink with respect to a recording medium can be improved, and the shape of an ink droplet adhering to the recording medium by an ink jet recording method can be made to be close to a perfect circle.

In addition, among nonionic surfactants, acetylenic glycol-based surfactants can be more preferably used in view of the fact that the acetylenic glycol-based surfactants have an excellent ability to appropriately keep the surface tension and the interfacial tension and are characterized to have little foaming property. Examples of the acetylenic glycol-based surfactants include 2,4,7,9-tetramethyl-5-decyne-4, 7-diol, 3,6-dimethyl-4-octyne-3,6-diol, 3,5-dimethyl-1-hexyne-3-ol, and 2,4-dimethyl-5-hexyne-3-ol. In addition, commercialized products can also be used as acetylenic glycol-based surfactant. Examples thereof include Surfinol 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, and GA (trade names, all manufactured by Air Products and Chemicals. Inc.), Olfine B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (trade names, all manufactured by Nisshin Chemical Industry Co., Ltd.), ACETYLENOL E00, E00P, E40, and E100 (trade names, all manufactured by Kawaken Fine Chemicals Co., Ltd.).

When a surfactant is contained, the content thereof is preferably 0.1 mass% to 5 mass% with respect to the total mass of the pigment ink.

The pigment ink according to this embodiment may contain a penetration enhancer. The penetration enhancer acts to further improve the wettability of the ink with respect to a recording medium to thereby uniformly wet the recording medium. Accordingly, unevenness in shade and bleeding of the ink of a formed image can be further reduced, and the color developing density of the image can be further improved. The penetration enhancers may be used singly or in mixture of two or more types.

Examples of the penetration enhancer include glycol ethers. Particularly, glycol ethers have an excellent effect as a penetration enhancer. Examples of the glycol ethers include ethylene glycol monobutyl ether, diethylene glycol monobutyl ether, triethylene glycol monoethyl ether, triethylene glycol monobutyl ether, propylene glycol monomethyl ether, dipropylene glycol monoethyl ether, propylene glycol monobutyl ether, and dipropylene glycol monobutyl ether. Among them, triethylene glycol monobutyl ether is preferably used in view of excellence in compatibility with the ingredients contained in the pigment ink according to this embodiment.

When a penetration enhancer is contained, the content thereof is preferably 1 mass% to 15 mass% with respect to the total mass of the pigment ink.

The pigment ink according to this embodiment may contain a moisturizing agent. Examples of the moisturizing agent include 1,2-alkanediols, polyhydric alcohols, pyrrolidone derivatives, and ureas. The moisturizing agents may be used singly or in mixture of two or more types.

Since 1,2-alkanediols excellently act to increase the wettability of the ink with respect to a recording medium to thereby uniformly wet the recording medium, it is possible to form an excellent image on the recording medium. Examples of the 1,2-alkanediols include 1,2-propanediol, 1,2-butanediol, 1,2-pentanediol, 1,2-hexanediol, and 1,2-octanediol. When 1,2-alkanediols are contained, the content thereof is preferably 1 mass% to 20 mass% with respect to the total mass of the pigment ink.

Polyhydric alcohols can be preferably used from the viewpoint that when an ink is used in an ink jet recording apparatus, clogging, discharge errors and the like can be reduced by suppressing the drying and solidification of the ink on a nozzle surface of a head. Examples of the polyhydric alcohols include ethylene glycol, diethylene glycol, triethylene glycol, propylene glycol, dipropylene glycol, 1,3-propanediol, 1,4-butanediol, 1,6-hexanediol, trimethylol propan, and glycerin. When polyhydric alcohols are contained, the content thereof is preferably 1 mass% to 30 mass% with respect to the total mass of the pigment ink.

Pyrrolidone derivatives can be preferably used from the viewpoint that clogging, discharge errors and the like can be reduced by suppressing the drying and solidification of the ink on a nozzle surface of a head. Examples of the pyrrolidone derivatives include N-methyl-2-pyrrolidone, N-ethyl-2-pyrrolidone, N-vinyl-2-pyrrolidone, 2-pyrrolidone, N-butyl-2-pyrrolidone, and 5-methyl-2-pyrrolidone. When pyrrolidone derivatives are contained, the content thereof is preferably 1 mass% to 10 mass% with respect to the total mass of the pigment ink.

Ureas can be preferably used from the viewpoint that when a pigment ink is used in an ink jet recording apparatus, clogging, discharge errors and the like can be reduced by suppressing the drying and solidification of the ink on a nozzle surface of a head. Examples of the ureas include urea, thiourea, ethyleneurea, and 1,3-dimethyl imidazolidinones. When ureas are contained, the content thereof is preferably 1 mass% to 20 mass% with respect to the total mass of the pigment ink.

The pigment ink according to this embodiment may have a pH adjuster. The pH adjuster may allow the pH value of the pigment ink to be easily adjusted. The pH adjusters may be used singly or in mixture of two or more types.

Examples of the ph adjuster include inorganic acids (for example, a sulfuric acid, a hydrochloric acid, a nitric acid, and the like), inorganic bases (for example, lithium hydroxide, sodium hydroxide, potassium hydroxide, ammonia, and the like), organic bases (triethanolamine, diethanolamine, monoethanolamine, tri-iso-propanolamine), and organic acids (for example, an adipic acid, a citric acid, a succinic acid, and the like).

Among the above examples, at least one of an organic acid and an organic base is preferably used as a pH adjuster. Particularly, in the case of using an organic acid and an organic base together, the pH buffering ability is higher than in the cases of using an inorganic acid and an inorganic base together, using an inorganic acid and an organic acid together, and using an organic acid and an inorganic base together. Accordingly, when an organic acid and an organic base are used together, the effect of suppressing the change in the pH value is further improved, and thus setting to desired pH is easily carried out.

The pigment ink according to this embodiment may further contain a preservative, a fungicide, a rust-preventive agent, a chelating agent, and the like. When the pigment ink according to this embodiment contains these compounds, the characteristics thereof are further improved in some cases.

Examples of the preservative and the fungicide include sodium benzoate, sodium pentachlorophenol, 2-pyridinethiol-1-sodium oxide, sodium sorbate, sodium dehydroacetate, and 1,2-dibenzisothiazolin-3-one. In commercialized products, Proxel XL2 and Proxel GXL (trade names, all manufactured by Avecia Inc.), Denicide CSA and NS-500W (trade names, all manufactured by Nagase ChemteX Corporation), and the like are used.

Examples of the rust-preventive agent include benzotriazole.

Examples of the chelating agent include ethylenediaminetetraacetic acids and their salts (disodium dihydrogen ethylenediaminetetraacetate and the like).

### 1.2. Dye Ink

The dye ink according to this embodiment contains water and a dye.

In a liquid droplet discharge apparatus according to this embodiment, the invention is not limited to using one type of a dye ink as will be described later, and a plurality of types of dye inks can be used. When a plurality of types of dye inks is used, the plurality of types of dye inks is not particularly limited, and for example, dye inks having different colors, dye inks having different chroma or brightness, or the like can be used. Examples of the dye inks having different colors include dye inks of which the types of dyes contained therein, respectively, are different from each other, such as a cyan ink and a magenta ink. Examples of the dye inks having different chroma or brightness include dye inks of which the colors of dyes contained therein, respectively, are the same as each other, but the contents of the dyes are different from each other, such as a cyan ink and a light-cyan ink.

Hereinbelow, the ingredients which are contained in the dye ink will be described. From among the ingredients contained in the above-described pigment ink, ingredients other than the pigment may be contained in the dye ink. Accordingly, description of the ingredients which can be used in common in the dye ink and the pigment ink will be omitted.

### (1) Dye

Examples of the dye according to this embodiment include dyes known in the past, for example, various dyes which are used in general ink jet recording, such as direct dyes, acid dyes, food dyes, basic dyes, reactive dyes, disperse dyes, vat dyes, soluble vat dyes, and reactive disperse dyes.

Examples of yellow dyes include, but are not limited to, C.I. Acid Yellow 1, 3, 11, 17, 19, 23, 25, 29, 36, 38, 40, 42, 44, 49, 59, 61, 70, 72, 75, 76, 78, 79, 98, 99, 110, 111, 127, 131, 135, 142, 162, 164, and 165; C.I. Direct Yellow 1, 8, 11, 12, 24, 26, 27, 33, 39, 44, 50, 58, 85, 86, 87, 88, 89, 98, 110, 132, 142, and 144; C.I. Reactive Yellow 1, 2, 3, 4, 6, 7, 11, 12, 13, 14, 15, 16, 17, 18, 22, 23, 24, 25, 26, 27, 37, and 42; C.I. Food Yellow 3 and 4; and C.I. Solvent Yellow 15, 19, 21, 30, and 109.

Examples of magenta dyes include, but are not limited to, C.I. Acid Red 1, 6, 8, 9, 13, 14, 18, 26, 27, 32, 35, 37, 42, 51, 52, 57, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 249, 252, 254, 262, 265, 274, 282, 289, 303, 317, 320, 321, and 322; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, and 231; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, and 64; C.I. Solubilized Red 1; and C.I. Food Red 7, 9, and 14.

Examples of cyan dyes include, but are not limited to, C.I. Acid Blue 1, 7, 9, 15, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143,151, 154, 158, 161, 166, 167, 168, 170, 171, 182, 183, 184, 187, 192, 199, 203, 204, 205, 229, 234, 236, and 249; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, and 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, and 46; C.I. Solubilized Vat Blue 1, 5, and 41; C.I. Vat Blue 4, 29, and 60; C.I. Food Blue 1 and 2; and C.I. Basic Blue 9, 25, 28, 29, and 44.

In addition, examples of dyes other than magenta, cyan, and yellow include, but are not limited to, C.I. Acid Green 7, 12, 25, 27, 35, 36, 40, 43, 44, 65, and 79; C.I. Direct Green 1, 6, 8, 26, 28, 30, 31, 37, 59, 63, and 64; C.I. Reactive Green 6 and 7; C.I. Acid Violet 15, 43, 66, 78, and 106; C.I. Direct Violet 2, 48, 63, and 90; C.I. Reactive Violet 1, 5, 9, and 10; and C.I. Direct Black 154.

The dye according to this embodiment is preferably a dye which can form salt using a functional group such as a sulfo group, a carboxy group, and a phosphono group in a molecule. When the salt is formed, the sulfo group, carboxy group, phosphono group, and the like in a molecule preferably form salt and cations of metal, ammonia, organic base, or the like.

Examples of the metal include alkali metal and alkaline-earth metal. Examples of the alkali metal include lithium, sodium, and potassium. Examples of the alkaline-earth metal include calcium and magnesium.

Examples of the organic base particularly include organic amine, such as C1-C3 alkylamines such as methylamine and ethylamine, and mono-, di- or tri-C1-C4 alkanolamines such as monoethanolamine, diethanolamine, and triethanolamine.

The dye according to this embodiment preferably has a metallic salt structure. As described above, when the dye has a metallic salt structure, the solubility of the dye is improved.

In addition, the conductivity of the dye ink can be easily set only by controlling the number of metallic ions and the number of functional groups in the dye which form the salt.

The metallic ions which are formed from the dye are preferably at least one of sodium ions and lithium ions. Accordingly, the solubility of the dye in the dye ink can be improved.

The content of the dye is preferably 1 mass% to 20 mass%, and more preferably 1 mass% to 10 mass% with respect to the total mass of the dye ink.

### 1.3. Physical Properties of Ink

The respective viscosities of the pigment ink and the dye ink at 20°C are preferably 2 mPa·s to 10 mPa·s, and more preferably 3 mPa·s to 6 mPa·s. When the viscosity of the ink at 20°C is in the above range, an appropriate amount of the ink is discharged from the nozzle, and thus flight deflection and scattering can be further reduced. Accordingly, the ink can be preferably used in an ink jet recording apparatus. The viscosities of the inks can be measured using a vibration viscometer VM-100AL (manufactured by Yamaichi Electronics Co., Ltd.) while the temperature of the ink is held at 20°C.

### 2. Liquid Droplet Discharge Apparatus

### 2.1. First Embodiment

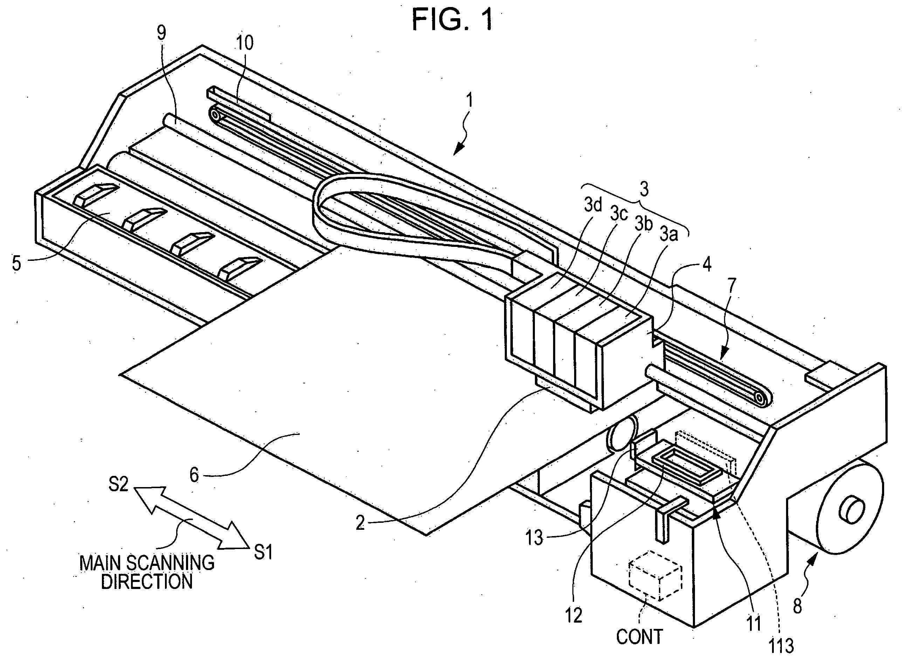

A liquid droplet discharge apparatus according to an embodiment of the invention has a head member. Hereinbelow, the liquid droplet discharge apparatus according to the embodiment of the invention will be described with reference to Figs. 1 to 3. In the drawings to be used in the following description, each member has a recognizable size and the scale of each member is thus appropriately changed. In this embodiment, as the liquid droplet discharge apparatus according to the invention, an ink jet printer (hereinbelow, simply referred to as "printer") is used as an example. 2.1.1. Configuration of Apparatus

Fig. 1 is a perspective view showing the configuration of a printer 1 of this embodiment. The printer 1 represents a serial printer.

As shown in Fig. 1, the printer 1 has a carriage 4 which is mounted with an ink jet head 2 and has an ink cartridge 3 detachably mounted therefrom, a platen 5 which is disposed below the ink jet head 2 and to which a recording medium 6 is transported, a carriage moving mechanism 7 which moves the carriage 4 in a medium width direction of a recording medium 6, and a medium sending mechanism 8 which transports a recording medium 6 in a medium sending direction. In addition, the printer 1 has a control device CONT which controls the action of the entire printer 1. The medium width direction is a main scanning direction (head scanning direction). The medium sending direction is a width scanning direction (direction perpendicular to the main scanning direction). "Head member" in the claims corresponds to "ink jet head 2" of this embodiment.

The ink cartridge 3 according,to this embodiment includes independent ink cartridges 3a, 3b, 3c, and 3d. The ink cartridges 3a to 3d are filled with the above-described pigment ink and dye ink, respectively. In this embodiment, the ink cartridge 3a is filled with a pigment ink, the ink cartridge 3b is filled with a first dye ink, the ink cartridge 3c is filled with a second dye ink, and the ink cartridge 3d is filled with a third dye ink.

The arrangement order of the ink cartridge 3 is not particularly limited. The ink cartridges may be arranged in a desired order. For example, in the example of Fig. 1, the ink cartridges 3a to 3d are arranged in order of the ink cartridges 3a, 3b, 3c, and 3d from one side in the main scanning direction (hereinbelow, sometimes referred to as "S1") toward the other side in the main scanning direction (hereinbelow, sometimes referred to as "S2"). The first dye ink, the second dye ink, and the third dye ink correspond to the above-described dye ink, and have different colors.

In this embodiment, the number of the ink cartridges is four, but is not limited thereto. Any desired number of ink cartridges can be mounted.

The ink cartridge 3 is not limited to mounting on the carriage 4 as in this embodiment. In place of this, for example, the ink cartridge 3 may be mounted on the housing of the printer 1 to supply the ink to the ink jet head 2 via an ink supply tube.

The carriage 4 is attached in a state supported by a guide rod 9 which is a support member installed in the main scanning direction. In addition, the carriage 4 moves by the carriage moving mechanism 7 in the main scanning direction along the guide rod 9.

A linear encoder 10 detects a position of the carriage 4 in the main scanning direction by a signal. The detected signal is transmitted as position information to the control device CONT. The control device CONT recognizes the scanning position of the ink jet head 2 on the basis of the position information from the linear encoder 10, and controls the recording (discharging) and the like by the ink jet head 2. In addition, the control device CONT is configured to be able to change the moving speed of the carriage 4.

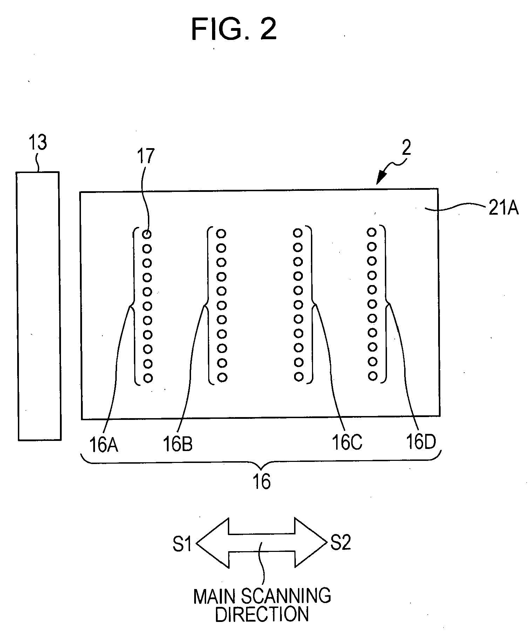

Fig. 2 is a schematic view showing a nozzle surface 21 A of the ink jet head 2 according to this embodiment. As shown in Fig. 2, the ink jet head 2 is provided with the nozzle surface 21A. On the nozzle surface 21A which is an ink discharge surface, a plurality of nozzle arrays 16 is arranged. Each of the plurality of nozzle arrays 16 includes a plurality of nozzle holes 17 for discharging the ink.

Each of the plurality of nozzle arrays 16 may discharge, for example, an ink having a different composition. In the example of Fig. 2, four nozzle arrays each corresponding to the composition of the ink are provided, and the respective nozzle arrays are arranged in the main scanning direction. Specifically, a nozzle array 16A capable of discharging the pigment ink, a nozzle array 16B capable of discharging a first dye ink, a nozzle array 16C capable of discharging a second dye ink, and a nozzle array 16D capable of discharging a third dye ink are included.

In the example of Fig. 2, the nozzle arrays 16A to 16D extend in a direction perpendicular to the main scanning direction on the nozzle surface 21, but are not limited thereto. These may be arranged at an angle to a direction perpendicular to the main scanning direction in the nozzle surface 21.

In order to change the type of the ink to be discharged for each nozzle array, for example, the arrangement order of the ink cartridges 3a to 3d may be changed.

A plurality of nozzle holes 17 is arranged in a predetermined pattern to form a nozzle array. In this embodiment, the nozzle holes 17 are arranged in parallel in a direction perpendicular to the main scanning direction on the nozzle surface 21A, but are not limited thereto. For example, the nozzle holes 17 may be arranged in a zigzag manner in a direction perpendicular to the main scanning direction on the nozzle surface 21A. The number of nozzle holes 17 of a nozzle array is not particularly limited.

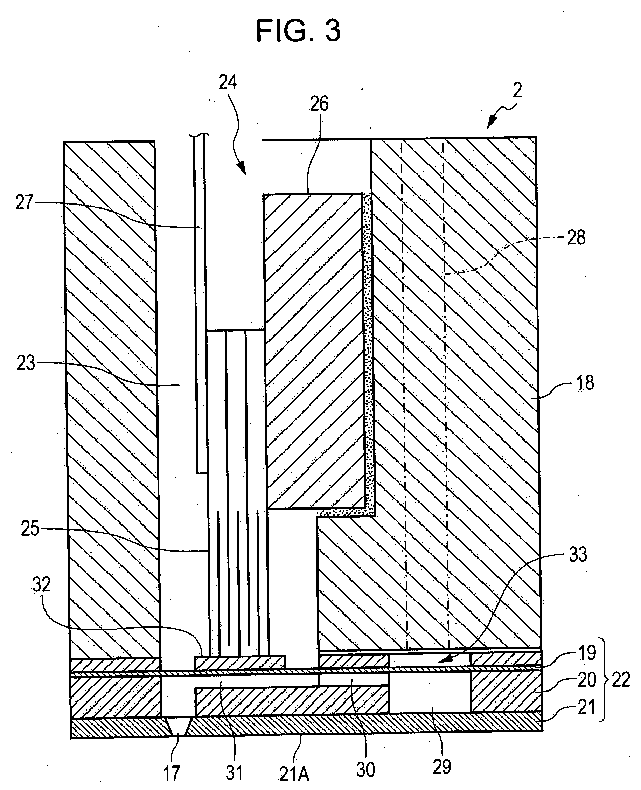

Fig. 3 is a partial cross-sectional view showing the internal configuration of the ink jet head 2 of this embodiment.

As shown in Fig. 3, the ink jet head 2 is provided with a head main body 18, and a flow passage forming unit 22 which is connected to the head main body 18. The flow passage forming unit 22 is provided with a vibration plate 19, a flow passage substrate 20, and a nozzle substrate 21, and has a common ink chamber 29, an ink supply port 30, and a pressure chamber 31 formed therein. Furthermore, the flow passage forming unit 22 is provided with an island portion 32 which functions as a diaphragm portion and a compliance portion 33 which absorbs a change in the pressure in the common ink chamber 29. In the head main body 18, an accommodation space 23 which accommodates a driving unit 24 in addition to a fixing member 26, and an internal flow passage 28 which guides the ink to the flow passage forming unit 22 are formed.

According to the above-described configuration, that is, according to the piezoelectric ink jet head 2, when a driving signal is input to the driving unit 24 via a cable 27, a piezoelectric element 25 is expanded and contracted. Accordingly, it is deformed (moves) in a direction in which the vibration plate 19 approaches or separates from the pressure chamber 31. Accordingly, the capacity of the pressure chamber 31 changes, and the pressure of the pressure chamber 31 accommodating the ink changes. Due to a change in the pressure, the ink is discharged from the nozzle holes 17.

The printer 1 of this embodiment, which is provided with the piezoelectric ink jet head 2, has been described as an example, but is not limited thereto. For example, a printer which is provided with a bubble-jet ink jet head (registered trade name) may be used.

Returning to Fig. 1, in a moving range of the ink jet head 2, a home position as a scanning start point of the ink jet head 2 is set in a region outside the platen 5. At the home position, a maintenance unit 11 including a cap member 12 and a wiping member 13 is provided.

The maintenance unit 11 is configured to execute, in addition to a printing action, a moisture retention action of suppressing the evaporation of the ink by capping the ink jet head 2 with the cap member 12, a flushing action of preventing the clogging of the nozzle holes 17 due to the viscosity-increased ink and adjusting the meniscus of the nozzle holes 17 by preliminarily discharging the ink to the cap member 12 from the respective nozzle holes 17 of the ink jet head 2, thereby normally discharging the ink from the ink jet head 2, an absorption action (head cleaning) of forcibly absorbing the ink having an increased viscosity, adhered dust, and the like from the respective nozzle holes 17 by driving an absorption pump (not shown) after capping of the ink jet head 2 with the cap member 12, thereby adjusting the meniscus and normally discharging the ink from the ink jet head 2, and a wiping action of removing the ink adhered around the nozzle holes 17, viscosity-increased ink, and the like, or breaking the meniscus of the nozzle holes 17 by wiping the nozzle surface 21 A (see Fig. 2) of the ink jet head 2 with the wiping member 13 to readjust the meniscus, thereby performing a purge treatment.

In the example of Fig. 1, the wiping member 13 is installed in the printing region in a region where the maintenance unit 11 is provided. In addition, as shown in Fig. 2, the wiping member 13 is disposed in parallel to the nozzle arrays 16A to 16D on the nozzle surface 21A.

The pigment ink and the dye ink which are used in the liquid droplet discharge apparatus of this embodiment have a relationship in conductivity as described above. Accordingly, even when the dye ink and the pigment ink are mixed on the nozzle surface 21Adue to wiping or the like, the aggregation of the pigment does not occur easily, and thus clogging of the nozzle holes 17 and the like due to the pigment aggregate can be reduced. As a result, the liquid droplet discharge apparatus according to this embodiment has excellent discharge stability.

### 2.1.2. Wiping Method

A wiping method for the nozzle surface 21 A according to this embodiment will be described with reference to Figs. 1 and 2.

First, the ink jet head 2 starts to move to the S1 side in the main scanning direction in accordance with an instruction such as a wiping instruction. When the ink jet head 2 reaches a printing region of the maintenance unit 11, the nozzle surface 21A of the ink jet head 2 is brought into contact with the wiping member 13. With the movement of the ink jet head 2 to the S1 side in the main scanning direction, wiping is carried out in order of the nozzle array 16A, the nozzle array 16B, the nozzle array 16C, and the nozzle array 16D. In this manner, the nozzle surface 21A is wiped with the wiping member.

The method of wiping the nozzle surface 21 A with the wiping member 13 by the movement of the ink jet head 2 has been shown, but the method is not limited thereto. For example, the nozzle surface 21A may be wiped by the movement of the wiping member 13.

In this embodiment, when the nozzle array 16A (nozzle array for discharging the pigment ink) is positioned so as to be wiped first among the nozzle arrays, the dye ink which is mixed due to wiping is reduced in the nozzle holes 17 for discharging the pigment ink. As a result, in the nozzle holes 17 of the nozzle array 16A, the aggregation of the pigment is reduced, and thus a liquid droplet discharge apparatus having excellent discharge stability is obtained.

In addition, the nozzle arrays 16B, 16C, and 16D are nozzle arrays for discharging the first to third dyes, and are preferably arranged to be closer to the nozzle array 16A in ascending order of conductivity of the dye ink to be discharged. When the nozzle arrays are arranged in this manner, in the case in which droplets of the pigment ink adhere to the nozzle surface 21 A, it is difficult for the droplets of the pigment ink to reach the nozzle array which discharges a dye ink having the highest conductivity. In addition, in the case in which droplets of the dye ink adhere to the nozzle surface 21 A, it is difficult for the droplets of the dye ink having the highest conductivity to reach the nozzle array which discharges the pigment ink. Accordingly, since the pigment ink and the dye ink having the highest conductivity are difficult to mix together on the nozzle surface 21 A, the aggregation of the pigment is further reduced.

In addition, when the nozzle arrays 16B to 16D are arranged to be closer to the nozzle array 16A in ascending order of conductivity of the dye ink to be discharged, the wiping of the nozzle surface 21 A is preferably performed in order from the nozzle array 16A in the nozzle array arrangement direction (main scanning direction). At this time, mixing of the pigment ink with the dye ink having the highest conductivity is performed at the end of the wiping. Accordingly, even when aggregate is generated due to the mixing, the aggregate which is adhered to the nozzle array in which the wiping is already completed is significantly reduced. As a result, the liquid droplet discharge apparatus according to this embodiment has more excellent discharge stability.

### 2.2. Second Embodiment

A liquid droplet discharge apparatus according to this embodiment is the same as in the first embodiment, except for the arrangement of the nozzle arrays, the position at which the wiping member is installed, and the wiping method for the nozzle surface. Hereinbelow, description of the same configuration of the liquid droplet discharge apparatus according to this embodiment as in the first embodiment will be omitted, and major differences with the first embodiment will be described.

### 2.2.1. Configuration of Apparatus

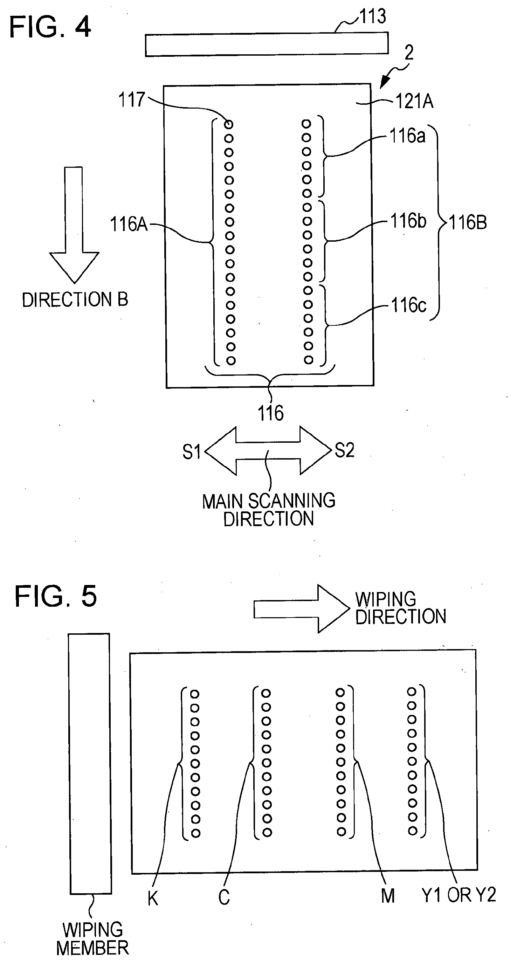

Fig. 4 is a schematic view showing a nozzle surface 121 A of an ink jet head 2 according to this embodiment. On the nozzle surface 121 A, a plurality of nozzle arrays 116 is arranged. In the example of Fig. 4, the plurality of nozzle arrays 116 includes a nozzle array 116A for discharging a pigment ink and a nozzle array 116B for discharging a dye ink. The number of nozzle arrays is not limited to two arrays, and more nozzle arrays may be provided.

In order to discharge dye inks having different colors, the nozzle array 116B is divided into a plurality of groups each having a predetermined number of nozzle holes 117 in a direction in which the nozzle holes 117 are arranged (hereinbelow, sometimes referred to as "direction B"). The direction B can also be referred to as the direction perpendicular to a main scanning direction in the nozzle surface 121A.

In the example of Fig. 4, the nozzle array 116B is divided into groups each having six nozzle holes 117, and includes a first group 116a, a second group 116b, and a third group 116c. The number of the nozzle holes 117 of one group is not particularly limited. In addition, the number of the nozzle holes 117 of a group may be the same or different in the respective groups.

Although not shown in the drawing, an ink cartridge is disposed so that the first group 116a can discharge a first dye, the second group 116b can discharge a second dye, and the third group 116c can discharge a third dye.

In the example of Fig. 4, the nozzle arrays 116A and 116B extend in a direction perpendicular to the main scanning direction on the nozzle surface 121 A, but are not limited thereto. These may be arranged at an angle to a direction perpendicular to the main scanning direction in the nozzle surface 121A.

In this embodiment, a wiping member 113 is disposed on the upstream side in the sub-scanning direction in a region where a maintenance unit is provided (home position) (see Fig. 1). In addition, as shown in Fig. 4, the wiping member 113 is disposed in a direction of the arrangement of the nozzle arrays 116A and 116B on the nozzle surface 121A (main scanning direction on the nozzle surface 121 A).

The pigment ink and the dye ink which are used in a liquid droplet discharge apparatus of this embodiment have a relationship in conductivity as described above. Accordingly, even when the dye ink and the pigment ink are mixed on the nozzle surface 121 A due to wiping or the like, the aggregation of the pigment does not occur easily, and thus clogging of the nozzle holes 117 and the like due to the pigment aggregate can be reduced. As a result, the liquid droplet discharge apparatus according to this embodiment has excellent discharge stability.

### 2.2.2. Wiping Method

A wiping method for the nozzle surface 121A according to this embodiment will be described with reference to Figs. 1 and 4.

First, the ink jet head 2 starts to move to the home position in accordance with an instruction such as a wiping instruction. When the ink jet head 2 reaches the home position, the wiping member 113 moves in the direction B (sub-scanning direction) and wipes the nozzle surface 121A. At this time, the nozzle arrays 116Aand 116B are wiped with the wiping member 113 at the same time. In the nozzle array 116B, the wiping is carried out in order of the first group 116a, the second group 116b, and the third group 116c.

The method of wiping the nozzle surface 121 A by the movement of the wiping member 113 has been shown, but the method is not limited thereto. For example, the ink jet head 2 may be designed to be able to move in the sub-scanning direction, and may be moved in the sub-scanning direction to wipe the nozzle surface 121A.

Here, when the nozzle array 116A for discharging the pigment and the nozzle array 116B for discharging the dye are provided to be close to each other, the pigment ink and the dye ink are mixed in some cases when the nozzle arrays 116A and 116B are wiped in a direction of the arrangement of the nozzle holes. In such cases, when there is a difference in conductivity between the pigment ink and the dye ink, the pigment contained in the pigment aggregates in the nozzle holes 117 and discharge errors of the nozzles and the like occur in some cases.

In order to reduce the above-described problem, the first group 116a, the second group 116b, and the third group 116c are preferably arranged to be wiped with the wiping member 113 in ascending order of conductivity of the dye ink to be discharged. When the groups are arranged in this manner, mixing of the pigment ink with the dye ink having the highest conductivity is performed at the end of the wiping. Accordingly, even when aggregate is generated due to the mixing, the aggregate which is adhered to the nozzle array in which the wiping is already completed is significantly reduced. As a result, the liquid droplet discharge apparatus according to this embodiment has more excellent discharge stability.

### 3. Examples

Hereinbelow, the invention will be described in detail using examples and comparative examples, but is not limited to the examples.

### 3.1. Preparation of Ink

### 3.1.1. Preparation of Pigment Ink

### (1) Preparation of Pigment Dispersion

20 parts by mass of a black pigment as a color material and 80 parts by mass of ion-exchange water were added, and then mixed and stirred. Then, using a sand mill (manufactured by Yasukawa Seisakusho Co., Ltd.), the mixture was subjected to a dispersion treatment for 6 hours with zirconia beads (with a diameter of 1.5 mm). Thereafter, the zirconia beads were separated by a separator to obtain a pigment dispersion.

### (2) Preparation of Pigment Ink

Next, each ingredient was mixed and stirred in an amount shown in Table 1, and pressure filtration was performed using a membrane filter having a pore size of 10 µm to obtain a black pigment ink (K). The unit described in Table 1 is mass%.

### 3.1.2. Preparation of Dye Ink

Each ingredient was mixed and stirred in an amount shown in Table 1, and pressure filtration was performed using a membrane filter having a pore size of 1.0 µm to obtain a cyan dye ink (C), a magenta dye ink (M), a first yellow dye ink (Y1), and a second yellow dye ink (Y2).

**Table 1**

| | | Pigment Ink (K) | Cyan Dye Ink (C) | Magenta Dye Ink (M) | First Yellow Dye Ink (Y1) | Second Yellow Dye Ink (Y2) |
|---|---|---|---|---|---|---|
| Color Material | Black Pigment Dispersion (Pigment Concentration 20% Potassium Salt) | 30 | | | | |
| | Cyan Dye | | 5 | | | |
| | Magenta Dye | | | 5 | | |
| | First Yellow Dye | | | | 5 | |
| | Second Yellow Dye | | | | | 5 |
| Penetration Enhancer | Triethylene Glycol Monobutyl Ether | 2 | 5 | 5 | 5 | 5 |
| Moisturizing Agent | 1,2-Hexanediol | 2 | 3 | 3 | 3 | 3 |
| | Glycerin | 9 | 10 | 10 | 10 | 10 |
| | Triethylene Glycol | | 8 | 8 | 8 | 8 |
| | Trimethylolpropane | 4 | | | | |
| | 2-Pyrrolidone | 3 | 3 | 3 | 3 | 3 |
| Surfactant | Acetylenic Glycol-based Surfactant A | 1 | 0.5 | 0.5 | 0.5 | 0.5 |
| | Acetylenic Glycol-based Surfactant B | | 0.5 | 0.5 | 0.5 | 0.5 |
| pH Adjuster | Triethanolamine | | 0.1 | 0.1 | 0.1 | 0.1 |
| | Potassium Hydroxide | 0.1 | | | | |
| Water | Ion-Exchange Water | Remaining Amount | Remaining Amount | Remaining Amount | Remaining Amount | Remaining Amount |
| Total Amount (mass%) | | 100 | 100 | 100 | 100 | 100 |
| Conductivity of Ink (mS/cm) | | 1.2 | 2.3 | 3.1 | 4.2 | 5.4 |

The ingredients in Table 1 are as follows.

### Color Material

- Black Pigment (manufactured by Evonik-Degussa GmbH., potassium salt converted from trade name PrinteX 30)
- Cyan Dye (lithium salt of C.I. Direct Blue 108)
- Magenta Dye (lithium salt of C.I. Acid Red 57)
- First Yellow Dye (lithium salt of C.I. Direct Yellow 12)
- Second Yellow Dye (lithium salt of C.I. Direct Yellow 142) All of the above metallic salts were obtained by treating in a usual manner. Penetration Enhancer
- Triethylene Glycol Monobutyl Ether

### Moisturizing Agent

- 1,2-Hexanediol
- Glycerin
- Triethylene Glycol
- Trimethylolpropane
- 2-Pyrrolidone

### Surfactant

- Acetylenic Glycol-based Surfactant A (trade name "Olfine E1010" manufactured by Nissin Chemical Industry Co., Ltd.)
- Acetylenic Glycol-based Surfactant B (trade name "Surfynol 104" manufactured by Air Products and Chemicals Inc.)

### pH Adjuster

- Triethanolamine
- Potassium Hydroxide

### Water

- Ion-exchange Water

### 3.2. Evaluation Test

### 3.2.1. Measurement of Conductivity

The conductivities of a pigment ink and dye inks at 20°C were measured by a conductivity meter DS-52 (trade name, manufactured by Horiba, Ltd.). The measurement results are shown together in Table 1.

### 3.2.2. Evaluation of Discharge Stability

### (1) Example 1

Using an ink jet printer (manufactured by Seiko Epson Corporation, trade name "PX-B500") modified to have the same configuration as that of the printer 1 shown in Fig. 1, dedicated ink cartridges were filled with the pigment ink (K), the cyan dye ink (C), the magenta dye ink (M), and the first yellow dye ink (Y1), respectively.

A cycle of (a) check printing using the pigment ink and all of the dye inks, (b) absorption action (head cleaning) of the nozzle surface and wiping of the nozzle surface, (c) check printing using the pigment ink and all of the dye inks, and (d) leaving of the ink jet printer for 24 hours was performed 10 times in this order.

The arrangement of the nozzle arrays for discharging the ink and the direction of wiping of the nozzle surface are as shown in Fig. 5. Fig. 5 is a schematic view showing a nozzle surface of an ink jet head which is used in Example 1 and Comparative Example 1 (to be described later).

Thereafter, the pigment and all of the dye inks were discharged from the nozzles to perform check printing, and the presence or absence of nozzle clogging and flight deflection is confirmed to evaluate discharge stability. The evaluation results are shown in Table 2. In addition, the evaluation standard is classified as follows, and when an evaluation of A or higher is obtained, discharge stability may be considered to cause no problems in practice.
"AA": No nozzle clogging and no ink flight deflection are found.
"A": No nozzle clogging is found, but slight ink flight deflection is found.
"B": Slight nozzle clogging and ink flight deflection are found.
"C": Nozzle clogging and ink flight deflection are found.

### (2) Example 2

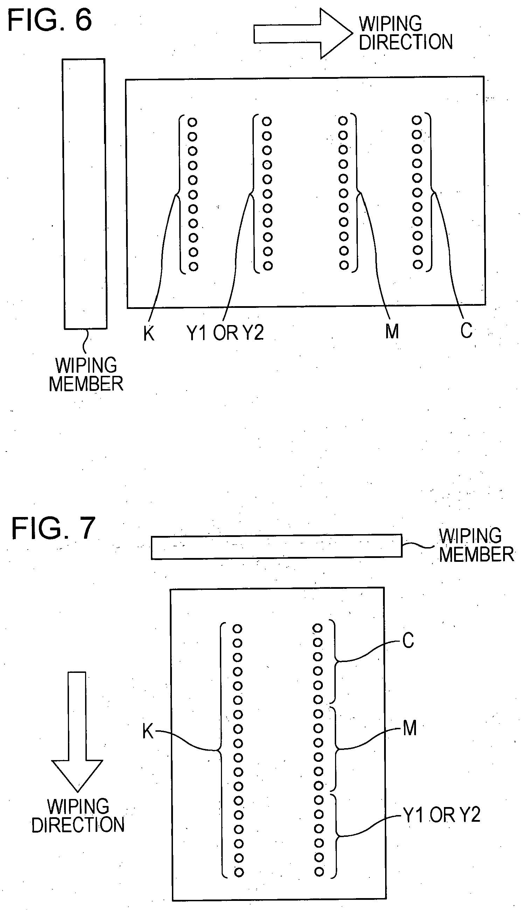

Example 2 is the same as Example 1, except that the arrangement of the nozzle arrays for discharging the ink and the direction of wiping of the nozzle surface are as shown in Fig. 6. Fig. 6 is a schematic view showing a nozzle surface of an ink jet head which is used in Example 2 and Comparative Example 2 (to be described later).

### (3) Example 3

Example 3 is the same as Example 1, except that the arrangement of the nozzle arrays for discharging the ink and the direction of wiping of the nozzle surface are as shown in Fig. 7. Fig. 7 is a schematic view showing a nozzle surface of an ink jet head which is used in Example 3 and Comparative Example 3 (to be described later).

### (4) Comparative Example 1

Comparative Example 1 is the same as Example 1, except that the second yellow dye ink (Y2) was used in place of the first yellow dye ink (Y1).

### (5) Comparative Example 2

Comparative Example 2 is the same as Example 2, except that the second yellow dye ink (Y2) was used in place of the first yellow dye ink (Y1).

### (6) Comparative Example 3

Comparative Example 3 is the same as Example 3, except that the second yellow dye ink (Y2) was used in place of the first yellow dye ink (Y1).

### 3.3. Evaluation Results

The results of the above-described evaluation test are shown in Table 2.

**Table 2**

| | Used Ink (Ink Set) | Conductivity of Ink (mS/cm) | Nozzle Arrangement and Wiping Direction | Discharge Stability | |
|---|---|---|---|---|---|
| | | | | Nozzle Clogging | Flight Deflection |
| Example 1 | K | 1.2 | Fig. 5 | AA | AA |
| | C | 2.3 | | | |
| | M | 3.1 | | | |
| | Y1 | 4.2 | | | |
| Example 2 | K | 1.2 | Fig. 6 | A | A |
| | C | 2.3 | | | |
| | M | 3.1 | | | |
| | Y1 | 4.2 | | | |
| Example 3 | K | 1.2 | Fig. 7 | AA | AA |
| | C | 2.3 | | | |
| | M | 3.1 | | | |
| | Y1 | 4.2 | | | |
| Comparative Example 1 | K | 1.2 | Fig. 5 | B | B |
| | C | 2.3 | | | |
| | M | 3.1 | | | |
| | Y2 | 5.4 | | | |
| Comparative Example 2 | K | 1.2 | Fig. 6 | C | C |
| | C | 2.3 | | | |
| | M | 3.1 | | | |
| | Y2 | 5.4 | | | |
| Comparative Example 3 | K | 1.2 | Fig. 7 | B | B |
| | C | 2.3 | | | |
| | M | 3.1 | | | |
| | Y2 | 5.4 | | | |

In all of the liquid droplet discharge apparatuses of Examples 1 to 3 in Table 2, the relationship between the conductivity [E₁ (mS/cm)] of the pigment ink and the conductivity [E₂ (mS/cm)] of the dye ink satisfies the relationship of 0<(E₂-E₁)≤3. Accordingly, the results of the discharge stability test show that the liquid droplet discharge apparatuses of Examples 1 to 3 have excellent discharge stability. Therefore, it is found that even when the pigment ink and the dye ink are mixed, the aggregation of the pigment does not occur easily.

Particularly, it is found that as in Example 1 and Example 3, when the nozzle surface is wiped in ascending order of conductivity of the dye ink to be discharged, it is particularly excellent in discharge stability.

On the other hand, in all of the liquid droplet discharge apparatuses of Comparative Examples 1 to 3 in Table 2, the relationship between the conductivity [E₁ (mS/cm)] of the pigment ink and the conductivity [E₂ (mS/cm)] of the dye ink does not satisfy the relationship of 0<(E₂-E₁)≤3. Accordingly, in the discharge stability test, nozzle clogging and flight deflection occurred. Therefore, it is found that the pigment aggregates due to the mixing of the pigment ink with the dye ink.

Particularly, it is found that as in Comparative Example 2, when nozzle arrays which respectively discharge a pigment ink and a dye ink having a large difference in conductivity are adjacent to each other, the discharge stability is significantly reduced.

## Claims

1. A liquid droplet discharge apparatus (1) comprising: a pigment ink which contains water and a pigment, a dye ink which contains water and a dye, a head member (2),
wherein the head member is provided with a nozzle surface (21A),
a plurality of nozzle arrays (116) including a first nozzle array (116A) and a second nozzle (116B) array is arranged on the nozzle surface,
the nozzle array includes a plurality of nozzle holes (17) which are arranged in a predetermined pattern,
the first nozzle array (116A) is arranged to discharge said pigment ink which contains water and a pigment,
the second nozzle array (116B) is arranged to discharge said dye ink which contains water and a dye, and **characterized in that**
the relationship between the conductivity [E₁ (mS/cm)] of the pigment ink and the conductivity [E₂ (mS/cm)] of the dye ink is expressed by the formula 0<(E₂-E₁)≤3,
the liquid droplet discharge apparatus further comprises a wiping member for wiping the nozzle surface (21 A), and
the wiping member is arranged to wipe the nozzle surface (21 A) in a direction of arrangement of the plurality of the nozzle arrays, and the first nozzle array is positioned so as to be wiped first among the nozzle arrays during wiping of the nozzle surface (21 A) by the wiping member.

2. The liquid droplet discharge apparatus according to claim 1,
wherein the first nozzle array (116A) is disposed at the endmost of the plurality of nozzle arrays (116A-D) arranged on the nozzle surface.

3. The liquid droplet discharge apparatus according to any one of the preceding claims,
wherein a plurality of second nozzle arrays (116B-D) is provided in order to discharge a plurality of types of dye inks from different nozzle arrays, and
the second nozzle arrays are arranged relative to the first nozzle array in ascending order of conductivity of the dye ink to be discharged.

4. The liquid droplet discharge apparatus according to Claim 1,
wherein the second nozzle array (116B) is divided into groups (116a-c) having a predetermined number of nozzle holes in a direction of the arrangement of the nozzle holes (17) in order to discharge a plurality of types of dye inks, and
the groups (116a-c) are arranged in the direction of the arrangement of the nozzle holes in ascending order of conductivity of the dye ink to be discharged.

5. The liquid droplet discharge apparatus according to Claim 4,
wherein the wiping member (13) wipes the nozzle surface (21 A) in ascending order from the group which discharges a dye ink having a low conductivity in the direction of the arrangement of the nozzle holes.

6. The liquid droplet discharge apparatus according to any preceding claim, wherein the conductivity E₂ is 2.0 to 4.0 (mS/cm).

7. The liquid droplet discharge apparatus according to any preceding claim, wherein the conductivity E₁ is 0.5 to 2.0 (mS/cm).

8. An ink set comprising:
a pigment ink which contains water and a pigment; and
a dye ink which contains water and a dye,
**characterized in that** the relationship between the conductivity, E₁ (mS/cm), of the pigment ink and the conductivity, E₂ (mS/cm), of the dye ink is expressed by the formula 0<(E₂-E₁)≤3.

9. The ink set according to claim 8, wherein the conductivity E₂ is 2.0 to 4.0 (mS/cm).

10. The ink set according to claim 8 or claim 9, wherein the conductivity E₁ is 0.5 to 2.0 (mS/cm).

## Patentansprüche

1. Flüssigkeitströpfchen-Abgabevorrichtung (1), umfassend:
eine Pigmenttinte, die Wasser und ein Pigment enthält, eine Farbstofftinte, die Wasser und einen Farbstoff enthält,
ein Kopfelement (2),
wobei das Kopfelement mit einer Düsenfläche (21A) versehen ist,
mehrere Düsenfelder (116), enthaltend ein erstes Düsenfeld (116A) und ein zweites Düsenfeld (116B), die auf der Düsenfläche angeordnet sind,
wobei das Düsenfeld mehrere Düsenöffnungen (17) enthält, die in einem vorbestimmten Muster angeordnet sind,
wobei das erste Düsenfeld (116A) zum Abgeben der Pigmenttinte angeordnet ist, die Wasser und ein Pigment enthält,
das zweite Düsenfeld (116B) zum Abgeben der Farbstofftinte angeordnet ist, die Wasser und einen Farbstoff enthält, und **dadurch gekennzeichnet, dass**
das Verhältnis zwischen der Leitfähigkeit [E₁ (mS/cm)] der Pigmenttinte und der Leitfähigkeit [E₂ (mS/cm)] der Farbstofftinte durch die Formel 0 < (E₂-E₁) ≤ 3 angegeben ist,
wobei die Flüssigkeitströpfchen-Abgabevorrichtung ferner ein Abstreifelement zum Abstreifen der Düsenfläche (21A) enthält und
das Abstreifelement zum Abstreifen der Düsenfläche (21A) in eine Richtung einer Anordnung der mehreren Düsenfelder angeordnet ist und ein erstes Düsenfeld so positioniert ist, dass es von den Düsenfeldern während des Abstreifens der Düsenfläche (21A) durch das Abstreifelement als erstes abgestreift wird.

2. Flüssigkeitströpfchen-Abgabevorrichtung nach Anspruch 1,
wobei das erste Düsenfeld (116A) am äußersten Ende der mehreren Düsenfelder (116A-D) angeordnet ist, die auf der Düsenfläche angeordnet sind.

3. Flüssigkeitströpfchen-Abgabevorrichtung nach einem der vorangehenden Ansprüche,
wobei mehrere zweite Düsenfelder (116B-D) vorgesehen sind, um mehrere Arten von Farbstofftinten aus verschiedenen Düsenfeldern abzugeben, und
die zweiten Düsenfelder relativ zum ersten Düsenfeld in aufsteigender Reihenfolge einer Leitfähigkeit der abzugebenden Farbstofftinte angeordnet sind.

4. Flüssigkeitströpfchen-Abgabevorrichtung nach Anspruch 1,
wobei das zweite Düsenfeld (116B) in Gruppen (116a-c) mit einer vorbestimmten Anzahl von Düsenöffnung in einer Richtung der Anordnung der Düsenöffnungen (17) unterteilt ist, um mehrere Arten von Farbstofftinten abzugeben, und
die Gruppen (116a-c) in der Richtung der Anordnung der Düsenöffnungen in aufsteigender Reihenfolge einer Leitfähigkeit der abzugebenden Farbstofftinte angeordnet sind.

5. Flüssigkeitströpfchen-Abgabevorrichtung nach Anspruch 4,
wobei das Abstreifelement (13) die Düsenfläche (21A) in aufsteigender Reihenfolge von der Gruppe, die eine Farbstofftinte mit niederer Leitfähigkeit abgibt, in Richtung der Anordnung der Düsenöffnungen abstreift.

6. Flüssigkeitströpfchen-Abgabevorrichtung nach einem der vorangehenden Ansprüche, wobei die Leitfähigkeit E₂ 2,0 bis 4,0 (mS/cm) ist.

7. Flüssigkeitströpfchen-Abgabevorrichtung nach einem der vorangehenden Ansprüche, wobei die Leitfähigkeit E₁ 0,5 bis 2,0 (mS/cm) ist.

8. Tintensatz, umfassend:
eine Pigmenttinte, die Wasser und ein Pigment enthält; und
eine Farbstofftinte, die Wasser und einen Farbstoff enthält,
**dadurch gekennzeichnet, dass** das Verhältnis zwischen der Leitfähigkeit [E₁ (mS/cm)] der Pigmenttinte und der Leitfähigkeit [E₂ (mS/cm)] der Farbstofftinte durch die Formel 0 < (E₂-E₁) ≤ 3 angegeben ist.

9. Tintensatz nach Anspruch 8, wobei die Leitfähigkeit E₂ 2,0 bis 4,0 (mS/cm) ist.

10. Tintensatz nach Anspruch 8 oder Anspruch 9, wobei die Leitfähigkeit E₁ 0,5 bis 2,0 (mS/cm) ist.

## Revendications

1. Appareil de déversement de gouttelettes de liquide (1) comprenant :
une encre à pigment qui contient de l'eau et un pigment, une encre à colorant qui contient de l'eau et un colorant,
un élément de tête (2),
dans lequel l'élément de tête est doté d'une surface à buses (21A),
une pluralité d'arrangements de buses (116), comprenant un premier arrangement de buses (116A) et un deuxième arrangement de buses (116B), étant disposés sur la surface à buses,
l'arrangement de buses comprenant une pluralité de trous de buse (17) qui sont disposés selon un motif prédéterminé,
le premier arrangement de buses (116A) étant disposé de manière à déverser ladite encre à pigment qui contient de l'eau et un pigment,
le deuxième arrangement de buses (116B) étant disposé de manière à déverser ladite encre à colorant qui contient de l'eau et un colorant, et **caractérisé en ce que**
le rapport entre la conductivité [E₁(mS/cm)] de l'encre à pigment et la conductivité [E₂(mS/cm)] de l'encre à colorant soit représenté par la formule 0< (E₂-E₁) ≤ 3,
l'appareil de déversement de gouttelettes de liquide comprenant en outre un élément d'essuyage pour essuyer la surface à buses (21A), et
l'élément d'essuyage étant disposé de manière à essuyer la surface à buses (21A) dans une direction d'agencement de la pluralité des arrangements de buse, et le premier arrangement de buses étant positionné de manière à être essuyé en premier parmi les arrangements de buses pendant l'essuyage de la surface à buses (21A) grâce à l'élément d'essuyage.

2. Appareil de déversement de gouttelettes de liquide selon la revendication 1,
dans lequel le premier arrangement de buses (116A) est disposé le plus à l'extrémité d'entre la pluralité des arrangements de buse (116A-D) disposés sur la surface à buses.

3. Appareil de déversement de gouttelettes de liquide selon l'une quelconque des revendications précédentes,
dans lequel une pluralité de deuxièmes arrangements de buses (116B-D) est fournie afin de déverser une pluralité de types d'encres à colorant à partir de différents arrangements de buses, et
les deuxièmes arrangements de buses étant disposés par rapport au premier arrangement de buses dans un ordre croissant de conductivité de l'encre à colorant à déverser.

4. Appareil de déversement de gouttelettes de liquide selon la revendication 1,
dans lequel le deuxième arrangement de buses (116B) est divisé en groupes (116a-c) ayant un nombre prédéterminé de trous de buse dans une direction d'agencement des trous de buse (17) afin de déverser une pluralité de types d'encres à colorant, et
les groupes (116a-c) étant disposés dans la direction de l'agencement des trous de buse dans un ordre croissant de conductivité de l'encre à colorant à déverser.

5. Appareil de déversement de gouttelettes de liquide selon la revendication 4,
dans lequel l'élément d'essuyage (13) essuie la surface à buses (21A), dans un ordre croissant à partir du groupe qui déverse une encre à colorant ayant une faible conductivité, dans la direction d'agencement des trous de buse.

6. Appareil de déversement de gouttelettes de liquide selon l'une quelconque des revendications précédentes, dans lequel la conductivité E₂ est de 2,0 à 4,0(mS/cm).

7. Appareil de déversement de gouttelettes de liquide selon l'une quelconque des revendications précédentes, dans lequel la conductivité E₁ est de 0,5 à 2,0(mS/cm).

8. Jeu d'encres, comprenant :
une encre à pigment qui contient de l'eau et un pigment ; et
une encre à colorant qui contient de l'eau et un colorant,
**caractérisé en ce que** le rapport entre la conductivité, E₁(mS/cm), de l'encre à pigment et la conductivité, E₂(mS/cm), de l'encre à colorant est représenté par la formule 0< (E₂-E₁) ≤ 3.

9. Jeu d'encres selon la revendication 8, dans lequel la conductivité E₂ est de 2,0 à 4,0(mS/cm).

10. Jeu d'encres selon la revendication 8 ou 9, dans lequel la conductivité E₁ est de 0,5 à 2,0(mS/cm).
